# EUROPÄISCHE PATENTANMELDUNG

(11) **EP 3 566 895 A1**
(43) Veröffentlichungstag der Anmeldung: **13.11.2019**
(21) Anmeldenummer: 19173595.0
(22) Anmeldetag: 09.05.2019
(51) Int. Cl.: B60L 5/20

(54) **STROMABNEHMER FÜR EIN SCHIENENFAHRZEUG**

(30) Priorität: 09.05.2018 DE 102018111208
(71) Anmelder: Bombardier Transportation GmbH, 10785 Berlin (DE)
(72) Erfinder: Tietze, Andreas, 13595 Berlin (DE); Tessmer, Wolfram, 13587 Berlin (DE); Maaß, Jöerg-Torsten, 16515 Oranienburg (DE)
(74) Vertreter: Zimmermann & Partner Patentanwälte mbB

(57) **Zusammenfassung**

Die Erfindung betrifft einen Stromabnehmer (1, 15) für ein in wenigstens einer Fahrtrichtung (F) betreibbares Schienenfahrzeug, insbesondere für ein Hochgeschwindigkeitsschienenfahrzeug, mit mindestens einem Schleifelementträger (4) mit einem Schleifelement (3) zur elektrischen Kontaktierung eines entlang einer Fahrstrecke verlaufenden Stromleiters, mit einer Andrückeinrichtung, durch die der Schleifelementträger (4) gegen den Stromleiter drückbar ist, und mit einer Windleitvorrichtung (2) mit wenigstens einem Windleitprofil (7) zur Erzeugung eines Auf- oder Abtriebs im Fahrtwind des Schienenfahrzeuges, wobei die Windleitvorrichtung (2) lösbar an dem Schleifelementträger (4) befestigt ist und eine Länge (l) aufweist, die einem Großteil der Länge eines Schleifelementträgers (L) beträgt.

## Beschreibung

Die Erfindung betrifft einen Stromabnehmer für ein in wenigstens einer Fahrtrichtung betreibbares Schienenfahrzeug, insbesondere für ein Hochgeschwindigkeitsschienenfahrzeug, mit mindestens einem Schleifelementträger mit einem Schleifelement zur elektrischen Kontaktierung eines entlang einer Fahrstrecke verlaufenden Stromleiters, mit einer Andrückeinrichtung, durch die der Schleifelementträger gegen den Stromleiter drückbar ist, und mit einer Windleitvorrichtung mit wenigstens einem Windleitprofil zur Erzeugung eines Auf- oder Abtriebs im Fahrtwind des Schienenfahrzeuges, wobei die Windleitvorrichtung lösbar an dem Schleifelementträger befestigt ist.

Elektrisch betriebene Schienenfahrzeuge für den Regional- und Fernverkehr sind üblicherweise mit Stromabnehmern ausgestattet, die der Energieversorgung des Schienenfahrzeuges über eine Oberleitung dienen. Für eine zuverlässige Energieübertragung zwischen der die Energie bereitstellenden Oberleitung und dem Schienenfahrzeug ist ein ständiger Kontakt zwischen dem Stromabnehmer und der Oberleitung erforderlich. Des Weiteren darf die Kontaktkraft bei sämtlichen betrieblich vorgesehenen Fahrgeschwindigkeiten nicht zu groß werden, um einen übermäßigen Verschleiß der Schleifelemente zu vermeiden.

Die Kontaktkraft zwischen Stromabnehmer und Oberleitung wird einerseits durch die auf das die Schleifelemente tragende Gestelle wirkende Hubkraft bestimmt, andererseits durch die aerodynamischen Kräfte, die durch den Fahrtwind entstehen.

Stromabnehmer auf Schienenfahrzeugen sind während des Betriebes, insbesondere im Hochgeschwindigkeitsverkehr, starken aerodynamischen Kräften ausgesetzt. Ungünstige Strömungsverhältnisse des Fahrtwindes können dazu führen, dass die für die Energieübertragung erforderliche Kontaktkraft zwischen dem Schleifelement des Stromabnehmers und der Oberleitung bei bestimmten Geschwindigkeiten des Schienenfahrzeuges unzulässig schwankt oder nicht im vorgesehenen Bereich liegt. Bekannte Mittel zur Steuerung der aerodynamischen Kräfte sind an dem Stromabnehmer befestigte Leitflügel und Leitflächen, mit denen die aerodynamisch bedingte Auftriebskraft eines Stromabnehmers eingestellt werden kann.

Die DE 424 091 offenbart einen Stromabnehmer mit einer Stromabnehmerwippe, der zur Balancierung der Kontaktkräfte an den Schleifleisten mit Flügeln versehen ist, die über einen Hebel auf die Stromabnehmerwippe wirken. Auch die DE 10 2013 203 199 A1 beschreibt einen Stromabnehmer mit einem Flügel zur Erzeugung einer Auftriebskraft und somit zur Erhöhung der Kontaktkraft, wobei der Flügel drehbar gelagert ist, um eine Ausrichtung des Flügels entsprechend der Fahrtrichtung zu ermöglichen. An dem in der DE 8 912 458 U1 beschriebenen Stromabnehmer sind Windleitbleche vorgesehen, die als aerodynamische Auftriebshilfe dienen.

Nachteile der separat befestigten Flügel bzw. Leitbleche sind das erhöhte Gewicht des Stromabnehmers, der insgesamt erhöhte Luftwiderstand und die erhöhte Wahrscheinlichkeit des Auftretens von Störlichtbögen.

Die DE 694 829 beschreibt eine Schleifleiste mit einer Staufläche zur Erzeugung eines Auftriebes, die Bestandteil des Schleifelementträgers ist. Die Leitflächen zur Erzeugung eines Auftriebs sind folglich in die Schleifleisten integriert.

Auch in der DE 297 22 534 U1 wird vorgeschlagen, das Profil des Schleifelementträgers mit einer einen Auftrieb erzeugenden Staufläche zu versehen. Um den Auftrieb für den Hochgeschwindigkeitsbereich zu begrenzen, weist die Staufläche eine Knickkante auf, oberhalb derer die Fläche einen anderen Schrägungswinkel aufweist.

In der DE 1 293 184 wird für einen Schleifleistenrahmen mit zwei Schleifleisten vorgeschlagen, jeweils unterhalb der Schleifleisten eine zur Mitte des Rahmens geneigte Schrägfläche vorzusehen, um im Fahrtwind an dem Schleifleistenrahmen einen Auftrieb zu erzeugen.

Die unmittelbar in die Schleifelementträger integrierten Stauflächen ermöglichen zumindest eine teilweise Vermeidung der oben genannten Nachteile. Eine Anpassung der aerodynamischen Eigenschaften, z.B. für den Betrieb auf unterschiedlichen Fahrzeugen mit unterschiedlichen Geschwindigkeiten, gestaltet sich aufgrund der Integration in die Schleifelementträger jedoch als schwierig. Zudem sind bei einem Austausch verschlissener Schleifleisten auch die mit den Schleifleisten verklebten Schleifelementträger auszutauschen, wobei sich aufgrund der integrierten Stauflächen ein erhöhter Materialaufwand ergibt.

Die DE 1 272 958 hat einen fahrtwindabhängigen, zusätzlichen Auftrieb unmittelbar an der Schleifleiste zum Ziel, wobei an den Schleifstücken des Stromabnehmers Leitflächen mit verschraubten Klemmfassungen befestigt werden. Die Leitflächen sind folglich austauschbar.

Ein Problem bekannter Stromabnehmer ist das zusätzliche Gewicht der Windleitvorrichtungen. Aufgabe der vorliegenden Erfindung ist folglich, das Gewicht der Windleitvorrichtung bei vergleichbarer aerodynamischer Wirkung zu reduzieren.

Diese Aufgabe wird erfindungsgemäß mit einem Stromabnehmer nach Anspruch 1 gelöst. Erfindungsgemäß weist die Windleitvorrichtung eine Länge auf, die einem Großteil der Länge einer Schleifleiste beträgt. Die Windleitvorrichtung kann sich über einen Großteil der Länge einer Schleifleiste erstrecken. Hierbei ist insbesondere die Länge der Schleifleiste gemeint, an der die Windleitvorrichtung befestigt ist.

Weitere Ausführungsformen, Modifikationen und Verbesserungen ergeben sich anhand der folgenden Beschreibung und der beigefügten Ansprüche.

Die Windleitvorrichtung kann eine Länge aufweisen, die wenigstens 60% der Länge einer Schleifleiste beträgt, bevorzugt wenigstens 80%. Indem die Länge der Schleifleiste für die Anordnung der Windleitvorrichtung weitestgehend bzw. bestmöglich ausgenutzt wird, kann die Windleitvorrichtung trotz ihrer geringen Höhe und bei geringem Luftwiderstand in einer Luftströmung eine verhältnismäßig starke aerodynamische Auftriebs- oder Abtriebskraft erzeugen.

Die Windleitvorrichtung kann eines oder mehrere Windleitprofile umfassen. Je nach Anordnung des wenigstens einen Windleitprofils kann im Fahrtwind ein Abtrieb oder ein Auftrieb erzeugbar sein. Bevorzugt kann ein Abtrieb erzeugt werden, um ggf. vorhandene Auftriebskräfte zu kompensieren, so dass ohne die Wirkung der Andrückeinrichtung im Wesentlichen keine oder nur eine geringfügige Kontaktkraft entsteht. Auf diese Weise kann die Kontaktkraft vollständig durch die Andrückeinrichtung gesteuert werden, um bei ausreichender Kontaktkraft einen kleinstmöglichen Verschleiß der Schleifleiste und der Oberleitung zu erreichen.

Um eine auf den Stromabnehmer wirkende Kraft zu erzeugen, weist das Windleitprofil eine Leitfläche auf, die um einen Neigungswinkel zur Fahrtrichtung oder zur lokalen Hauptströmungsrichtung geneigt angeordnet ist. Dieser Neigungswinkel beträgt bevorzugt mehr als 20°, vorzugsweise mehr als 40°, weiter vorzugsweise mehr als 70°. Um eine stabile, kontinuierliche Auf- oder Abtriebskraft zu erzeugen, kann der Neigungswinkel gemäß einer weiteren Ausgestaltung stumpf gewählt werden und insbesondere zwischen 60° und 80°, bevorzugt um mehr als 70° gegenüber der Fahrtrichtung geneigt sein.

Gemäß einer weiteren zweckmäßigen Weiterbildung des Stromabnehmers kann das Windleitprofil in horizontaler Richtung und in oder entgegen der Fahrtrichtung durch den Schleifelementträger und/oder das Schleifelement im Wesentlichen vollständig verdeckt angeordnet sein. Insbesondere bei Änderung der Fahrtrichtung wird somit durch das Windleitprofil kein zusätzlicher Luftwiderstand erzeugt.

In einer bevorzugten Variante des Stromabnehmers weist die Andrückeinrichtung einen Antrieb und eine Steuervorrichtung zur Ansteuerung des Antriebes auf. Die Steuereinrichtung kann ausgestaltet sein, die über die Andrückeinrichtung auf den Stromabnehmer wirkende Kraft gemäß einer vordefinierten Soll-Kraft zu regulieren. Somit kann ein Über- oder Unterschreiten der Soll-Kraft vermieden werden. Für eine genauere Regulierung der Kontaktkraft kann eine mit der Steuereinrichtung verknüpfte Kontaktkraftmesseinrichtung vorgesehen sein. Die Steuereinrichtung kann zudem ausgestaltet sein, bei Unterschreiten einer vorbestimmten Kontaktkraft eine Erhöhung der Kontaktkraft oder bei Überschreiten einer vorbestimmten Kontaktkraft eine Verringerung der Kontaktkraft zu bewirken.

Um möglichst günstige Strömungsverhältnisse und einen geringen Luftwiderstand zu erreichen kann das Verhältnis der Breite des Windleitprofils zur Breite des Schleifelementträgers und/oder der Schleifleiste wenigstens 0,4, vorzugsweise wenigstens 0,7, weiter vorzugsweise wenigstens 0,9 betragen.

Das Windleitprofil ist bevorzugt wiederholt lösbar am Schleifelementträger befestigt. Damit ist ein Austausch des Windleitprofils zur Anpassung des Stromabnehmers an unterschiedliche Geschwindigkeiten und eine Wiederverwendung des Windleitprofils bei einem Austausch der Schleifleiste möglich.

In einer weiteren vorteilhaften Ausgestaltung kann der Stromabnehmer für ein in zwei entgegengesetzte Fahrtrichtungen betreibbares Fahrzeug ausgestaltet sein. Dazu kann ein zweites Windleitprofil vorgesehen sein. Das zweite Windleitprofil kann an einer dem ersten Windleitprofil bezüglich der Schleifleiste oder des Stromabnehmers entgegengesetzten Seite angeordnet sein.

Gemäß einer Ausführungsform kann der Stromabnehmer eine Stromabnehmerwippe aufweisen. Der Stromabnehmer kann eine um eine Drehachse gelagerte Stromabnehmerwippe mit zwei Schleifleisten umfassen Die zwei Windleitprofile können an zwei Seiten der Stromabnehmerwippe angeordnet sein, insbesondere an zwei bzgl. einer Mittelachse der Stromabnehmerwippe einander gegenüberliegenden Seiten. Bevorzugt sind das oder die Windleitprofile derart angeordnet und ausgestaltet, dass auf beide Schleifleisten der Stromabnehmerwippe, auch ohne die Mitwirkung einer Andrückeinrichtung, eine ähnlich große Kontaktkraft wirkt.

Vorzugsweise kann an jeder der Schleifleisten der Stromabnehmerwippe ein Windleitprofil befestigt sein. Die Windleitprofile können derart ausgestaltet sein, dass im Fahrtwind durch die Windleitprofile erzeugte Kräfte bezüglich der Drehachse im Wesentlichen ausgeglichen sind.

Gemäß einer zweckmäßigen Weiterbildung des Stromabnehmers für den grenzüberschreitenden Bahnverkehr kann dieser neben wenigstens einem starr angeordneten Teil einen verfahrbar angeordneten Teil aufweisen, der zwischen einer eingefahrenen und einer ausgefahrenen Position beweglich angeordnet ist, wobei an dem verfahrbar angeordneten Teil ein Windleitprofil befestigt ist und das Windleitprofil in der eingefahrenen Position in und/oder entgegen der Fahrtrichtung von dem Profil des starr angeordneten Teils überdeckt ist.

Der Stromabnehmer kann neben wenigstens einer starr angeordneten Schleifleiste verfahrbar ausgestaltete Auflaufhörner und/oder wenigstens eine verfahrbar ausgestaltete Schleifleiste aufweisen, die zwischen einer eingefahrenen und einer ausgefahrenen Position beweglich angeordnet sind. Um die auf den Stromabnehmer wirkenden aerodynamischen Kräfte sowohl in der ein- als auch in der ausgefahrenen Stellung zu steuern bzw. auszugleichen, kann an dem verfahrbar ausgestalteten Teil des Stromabnehmers ein Windleitprofil angeordnet sein. Vorzugsweise kann das Windleitprofil in der eingefahrenen Position in und/oder entgegen der Fahrtrichtung von dem Profil der starr angeordneten Schleifleiste zumindest teilweise überdeckt sein.

Ein Windleitprofil für einen erfindungsgemäßen Stromabnehmer kann vorzugsweise ein Vollprofil oder ein Dreikantprofil umfassten. Durch diese Formgebung wird dem Windleitprofil eine höhere Formstabilität verliehen, wodurch ein geringerer Materialeinsatz oder die Verwendung leichterer Materialien möglich wird.

Das Windleitprofil kann gemäß einer weiteren bevorzugten Variante aus einem Vollprofil bestehen. Somit wird eine noch stärkere Formstabilität erreicht.

Das Windleitprofil kann zudem im Wesentlichen von einem nichtmetallischen Werkstoff gebildet sein. Nichtmetallische Werkstoffe ermöglichen eine noch größere Gewichtsersparnis. Insbesondere können nichtleitende Werkstoffe verwendet werden, um die isolierenden Eigenschaften zu verbessern und die Gefahr von Spannungsüberschlägen zu verringern. Das Windleitprofil kann bevorzugt von einem Kunststoffprofil gebildet sein, wobei insbesondere wetterfeste, formstabile Kunststoffe in Frage kommen. Bevorzugt umfasst das Windleitprofil den Werkstoff PTFE (Polytetrafluorethylen). Das Windleitprofil kann teilweise oder vollständig aus PTFE gebildet sein. Insbesondere die Oberfläche des Windleitprofils kann PTFE umfassen oder vollständig aus PTFE gebildet sein. Aufgrund des geringen Reibungskoeffizienten dieses Werkstoffs wird Schmutz an seiner Oberfläche am Anhaften gehindert. Die in Verbindung mit einer Verschmutzung erhöhte Gefahr von Spannungsüberschlägen, die an dem Stromabnehmer und nahe an der Oberleitung besonders ausgeprägt ist, wird somit reduziert.

Das Windleitprofil kann vorzugsweise wenigstens abschnittsweise keilförmig ausgestaltet sein. Das Windleitprofil kann einen keilförmigen Querschnitt aufweisen. Mit dem Windleitprofil kann somit auf einer Montagefläche einer Schleifleistenhalterung eine angewinkelte Staufläche erstellt werden, um einen aerodynamischen Auf- oder -Abtrieb zu erzeugen. Die Keilform ermöglicht dabei einen effizienten Materialeinsatz.

Gemäß einer weiteren bevorzugten Ausgestaltung kann das Windleitprofil einen im Wesentlichen trapezförmigen Querschnitt aufweisen. Das Windleitprofil kann an einer in Fahrtrichtung weisenden Seite, insbesondere an einem in Fahrtrichtung weisenden Ende, eine Fase aufweisen. Dadurch entsteht für die auf das Windleitprofil auftreffende Strömung ein insgesamt stumpferer Übergang, der hinsichtlich der aerodynamischen Kräfte stabilisierend wirken kann. Um für unterschiedliche Konfigurationen von Stromabnehmern für unterschiedliche Fahrzeuge angepasste Windleitprofile bereitzustellen, kann das Windleitprofil alternativ mit größeren Fasen versehen sein.

Ein modularer Bausatz zur Herstellung eines erfindungsgemäßen Stromabnehmers kann mehrere Windleitprofile mit verschiedenen Querschnittsprofilen umfassen. Insbesondere die Flächen des Windleitprofils, die der Anbindung des Windleitprofils an den Stromabnehmer dienen, können ähnlich oder identisch zueinander ausgestaltet sein. Beispielsweise können ansonsten gleichförmig ausgestaltete Windleitprofile mit unterschiedlich breiten Fasen versehen sein, um die Größe der Windleitfläche und/oder die Geometrie des Windleitprofils an die Erfordernisse anzupassen.

Das Windleitprofil kann wenigstens eine Windleitfläche aufweisen, wobei die Windleitfläche wenigstens eine Ausnehmung aufweisen kann. Durch die wenigstens eine Ausnehmung werden zusätzliche Verwirbelungen erzeugt, die eine Strömungsablösung verzögern und die Wahrscheinlichkeit des Auftretens von Schwingungen, hervorgerufen durch aerodynamische Kräfte, verringern.

Die Windleitfläche kann gemäß einer zweckmäßigen Weiterbildung mehrere Ausnehmungen aufweisen. Das Windleitprofil kann entsprechend mehrere Windleitabschnitte umfassen, die durch Ausnehmungen voneinander getrennt sind. Die Windleitabschnitte können keilförmig bzw. als keilförmige Abschnitte geformt sein. Die Ausnehmungen können Turbulatoren bilden. Durch die Ausnehmungen werden somit weitere Verwirbelungen erzeugt, die eine Strömungsablösung verzögern und die Wahrscheinlichkeit des Auftretens von Schwingungen verringern. Durch aerodynamische Kräfte hervorgerufenen Eigenschwingungen können somit durch Querwirbel zerstückelt werden.

Die Länge der Windleitabschnitte kann etwa 10 % der Länge des Windleitprofils betragen. Die Länge der Ausnehmungen kann etwa 50 % der Länge der Windleitabschnitte oder 5 % der Länge des Windleitprofils betragen. Bei einem etwa 1 m langen Windleitprofil können die Windleitabschnitte eine Länge von etwa 10 cm aufweisen, die Ausnehmungen eine Länge von etwa 5 cm. Ein etwa 1 m langes Windleitprofil kann somit etwa 6 Windleitabschnitte aufweisen, die von jeweils einer etwa 5 cm langen Aussparung unterbrochen sind.

Die Windleitvorrichtung kann in einer weiteren Variante der Erfindung eine Vielzahl von Windleitprofilen umfassen, die jeweils einen Windleitabschnitt bilden. Die Windleitprofile können jeweils ein Segment der Windleitvorrichtung bilden. Die Windleitprofile können zudem jeweils die Länge eines Windleitabschnittes aufweisen. Mehrere Windleitprofile können beabstandet voneinander entlang dem Schleifleistenträger des Stromabnehmers befestigt sein, um eine Windleitfläche mit Ausnehmungen zu schaffen. Die Windleitprofile können unabhängig voneinander an dem Stromabnehmer befestigt sein.

Ein Stromabnehmer mit einem starr angeordneten Teil und einem verfahrbar angeordneten Teil, der zwischen einer eingefahrenen und einer ausgefahrenen Position beweglich angeordnet ist, kann an dem verfahrbaren Teil ein Segment aufweisen. Bei ausgefahrenem Stromabnehmer kann das Segment an dem verfahrbaren Teil zu einem benachbarten Segment an dem starr angeordneten Teil einen Abstand aufweisen, der dem Abstand zwischen zwei Segmenten an dem starr angeordneten Teil entspricht.

Für eine effiziente Erzeugung aerodynamischer Steuerkräfte weist das Windleitprofil bevorzugt eine Höhe auf, die weniger als 20 %, vorzugsweise weniger als 10 % der Länge des Windleitprofils beträgt. Bei geringeren zu erzeugenden Auf- oder Abtriebskräften kann das Windleitprofil eine Höhe aufweisen, die nur 5 % der Länge des Windleitprofils beträgt.

Das Verhältnis von Länge zu Breite der Leitfläche des Windleitprofils kann vorzugsweise wenigstens 5 (100/20), wenigstens 22 (450/20), weiter vorzugsweise wenigstens 27 (540/20), insbesondere wenigstens 35 (705/20) betragen.

Die beiliegenden Zeichnungen dienen zusammen mit der Beschreibung der Erläuterung der Prinzipien der Erfindung. Im Folgenden werden unter Bezugnahme auf die Figuren 1 bis 4 bevorzugte Ausführungsbeispiele des erfindungsgemäßen Stromabnehmers beschrieben.
Fig. 1 ist eine Seitenansicht eines erfindungsgemäßen Stromabnehmers;
Fig. 2 ist eine Schnittansicht eines Schleifelementträgers;
Fig. 3 ist eine Seitenansicht einer erfindungsgemäßen Windleitvorrichtung;
Fig. 4 zeigt eine geschnittene Seitenansicht der Windleitvorrichtung der Fig. 3 an der Stelle A-A;
Fig. 5 zeigt weitere Varianten einer geschnittenen Seitenansicht einer Windleitvorrichtung;
Fig. 6 zeigt eine geschnittene Seitenansicht der Windleitvorrichtung der Fig. 3 an der Stelle B-B;
Fig. 7 ist eine Seitenansicht eines ausfahrbaren Stromabnehmers im eingefahrenen Zustand;
Fig. 8 ist eine Seitenansicht des Stromabnehmers der Fig. 3 in ausgefahrenem Zustand.

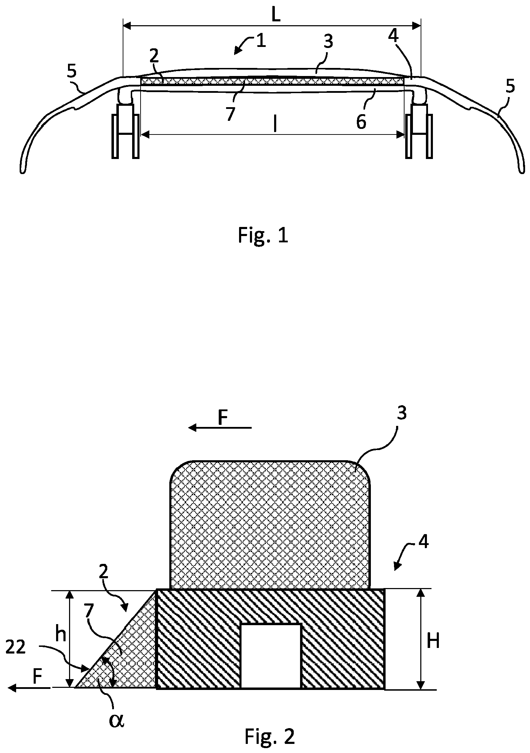

Fig. 1 zeigt einen erfindungsgemäßen Stromabnehmer 1 mit einer Windleitvorrichtung 2. Der Stromabnehmer 1 trägt ein als Schleifleiste gestaltetes Schleifelement 3, das der Kontaktierung mit einer hier nicht dargestellten Oberleitung dient. Das Schleifelement 3 ist in einem Schleifelementträger 4 angeordnet. Der Schleifelementträger 4 weist an seinen Enden jeweils Auflaufhörner 5 auf, die dazu dienen, eine aufliegende Oberleitung in Richtung des Schleifelementes 3 zu leiten. Der Schleifelementträger 4 wird von einem Traggestell 6 getragen, an das eine Andrückvorrichtung zur Herstellung einer Kontaktkraft zwischen Stromabnehmer 1 und Oberleitung anschließbar ist.

Die Windleitvorrichtung 2, die hier schraffiert dargestellt ist, umfasst ein Windleitprofil 7, das unmittelbar am Schleifelementträger 4 befestigt ist. Das Windleitprofil 7 deckt sich im Wesentlichen mit dem Profil des Schleifelementträgers 4. Die Höhe des Windleitprofils 7 ist folglich geringer oder maximal so groß wie die Höhe des Schleifelementträgers 4. Um trotz der geringen zur Verfügung stehenden Höhe eine ausreichende aerodynamische Kraftentfaltung zu erreichen, ist die Länge l des Windleitprofils 7 derart gewählt, dass sie einem Großteil der Länge L des Schleifelementträgers 4 entspricht. Die in Fahrtrichtung weisende Außenfläche des Schleifelementträgers 4 wird also fast vollständig genutzt, um das Windleitprofil 7 verhältnismäßig lang gestalten zu können. Insbesondere kann das Windleitprofil 7 auch annähernd so lang wie das Schleifelement 3 oder länger als das Schleifelement 3 gestaltet sein.

Fig. 2 ist eine vergrößerte schematische Schnittansicht eines Schleifleistenträgers 4. Der Schleifleistenträger 4 trägt ein Schleifelement 3, das dem elektrischen Kontakt mit einer Oberleitung dient. An einer Stirnfläche des Schleifelementträgers 4, die in Fahrtrichtung F weist, ist die Windleitvorrichtung 2 bzw. das Windleitprofil 7 angeordnet. Bevorzugt ist die Windleitvorrichtung 2 mit dem Schleifelementträger 4 verschraubt. Sie kann mit diesem jedoch auch formschlüssig oder über eine Klemmverbindung verbunden sein.

Das Windleitprofil 7 weist eine Höhe h auf, die geringer ist als eine Höhe H des Schleifelementträgers 4 oder alternativ der Höhe H des Schleifelementrägers 4 entspricht. Die in Fahrtrichtung F weisende Querschnittsfläche des Stromabnehmers 1 wird durch die Windleitvorrichtung 2 folglich nicht vergrößert. Somit ist gegenüber einem Stromabnehmer ohne entsprechende Windleitvorrichtung 2 insgesamt keine vergrößerte Querschnittsfläche und somit im Wesentlichen auch kein vergrößerter Luftwiderstand zu erwarten.

Das Windleitprofil weist eine Leitfläche 22 auf, die um einen Neigungswinkel α zur Fahrtrichtung F oder zur lokalen Hauptströmungsrichtung geneigt angeordnet ist. Die Leitfläche 22 hat die Funktion einer Staufläche. Der Neigungswinkel α der Leitfläche 22 gegenüber der Fahrtrichtung F oder gegenüber einer horizontalen Ebene beträgt hier etwa 45°.

Das Windleitprofil 7 ist aus einem nichtmetallischen, nichtleitenden Werkstoff, bevorzugt aus Kunststoff gebildet. Die ermöglicht eine erhebliche Gewichtsersparnis und eine Verbesserung der isolierenden Eigenschaften. Das Windleitprofil 7 kann von einem Kunststoffprofil gebildet sein. Das Kunststoffprofil kann bereits keilförmig geformt sein. Das Kunststoffprofil kann als Vollprofil gestaltet sein, wie hier gezeigt, oder als Hohlkörper. Die Verwendung eines Vollprofils hat den Vorteil, dass auch sehr leichte, weniger formstabile Kunststoffe oder geschäumte Werkstoffe verwendet werden können. Insbesondere kommen wetterfeste, formstabile Kunststoffe in Frage.

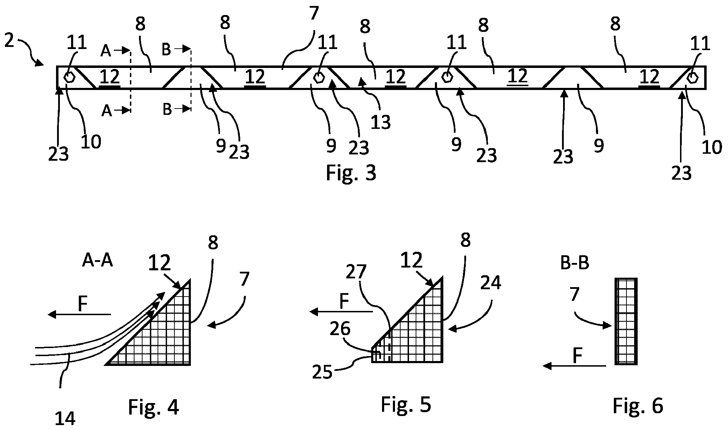

In Fig. 3 ist eine weitere Variante einer Windleitvorrichtung 2 gezeigt. Das Windleitprofil 7 umfasst fünf Windleitabschnitte 8, zwischen denen jeweils Ausnehmungen 9 vorgesehen sind. Die Windleitabschnitte 8 sind keilförmig gestaltet. Zusätzlich sind an den Enden des Windleitprofils 7 Ausnehmungen 10 angeordnet, die der Befestigung des Windleitprofils 7 dienen. Die Ausnehmungen 9 und 10 bilden Befestigungsabschnitte 23. Für die Befestigung des Windleitprofils 7 weist die Windleitvorrichtung 2 Schrauben 11 auf, die in hier durch die Schraubenköpfe verdeckten Durchgangsöffnungen in den Ausnehmungen 9 und 10 angeordnet sind.

Die Windleitabschnitte 8 bilden jeweils Windleitflächen 12, die als Stauflächen wirken. Die Windleitflächen 12 liegen auf einer gemeinsamen Ebene und formen gemeinsam eine Windleitfläche 13. Die Ausnehmungen 9 sind folglich auch Ausnehmungen der Windleitfläche 12. Durch die Ausnehmungen 9 werden zusätzliche Verwirbelungen erzeugt, die eine Strömungsablösung verzögern und dadurch die Wahrscheinlichkeit des Auftretens von aerodynamischen Schwingungen verringern.

Die Windleitabschnitte 8 können in Längsrichtung des Windleitprofils 7 etwa die zweifache Länge einer Ausnehmung 9 haben. Die Windleitabschnitte 8 können in Längsrichtung des Windleitprofils 7 eine Länge von etwa 10 cm aufweisen, die Ausnehmungen 9 eine Länge von etwa 5 cm. Im Ausführungsbeispiel der Fig. 3 sind fünf keilförmige Windleitabschnitte 8 vorgesehen. Ein etwa 1 m langes Windleitprofil 7 kann etwa sechs Windleitabschnitte 8 aufweisen, die von jeweils einer etwa 5 cm langen Ausnehmung 9 unterbrochen sind.

Fig. 4 zeigt eine Schnittansicht an der Stelle A-A der Fig. 3. Die Windleitfläche 12 bildet eine Staufläche, an der die Luftströmung 14 aufgestaut wird. Das Windleitprofil 7 ist wenigstens abschnittsweise keilförmig und als Vollprofil geformt. Auch bei Verwendung eines leichten, weniger steifen Materials wie Kunststoff oder geschäumten Werkstoffen ergibt sich damit eine ausreichende Steifigkeit, wobei das Windleitprofil 7 gegenüber metallischen Werkstoffen insgesamt leichter wird.

Fig 5. ist eine Schnittansicht einer weitere Variante eines Windleitprofils 24. Im Gegensatz zum Windleitprofil 7 der Fig. 4 ist an in Fahrtrichtung F weisenden Seite des Windleitprofils 24 eine Fase 28 angeordnet. Im Vergleich zum Windleitprofil 7 der Fig. 4 verkleinert die Fase 25 die Windleitfläche 12. Des Weiteren entsteht an der in Fahrtrichtung F weisenden Seite des Windleitprofils 24 ein stumpferer Übergang, der hinsichtlich der aerodynamischen Kräfte stabilisierend wirken kann. Um für unterschiedliche Konfigurationen von Stromabnehmern für unterschiedliche Fahrzeuge angepasste Windleitprofile 24 bereitzustellen, kann das Windleitprofil alternativ mit größeren Fasen versehen sein, wie in Fig.5 mit der Fase 26 und der Fase 27 gezeigt.

Fig. 6 zeigt eine Schnittansicht des Windleitprofils 7 an der Stelle B-B der Fig. 3, also im Bereich einer Ausnehmung 9. Der Querschnitt ist an dieser Stelle im Wesentlichen rechteckig gestaltet, um eine starre Verbindung zwischen den Windleitflächen 12 und eine Auflage für Schrauben 11 zu schaffen. Auch im Bereich einer Ausnehmung 9 kann eine Windleitfläche vorgesehen sein. Dazu kann beispielsweise eine in Fahrtrichtung F weisende Kante des Windleitprofils 7 im Bereich der Ausnehmung angeschrägt sein.

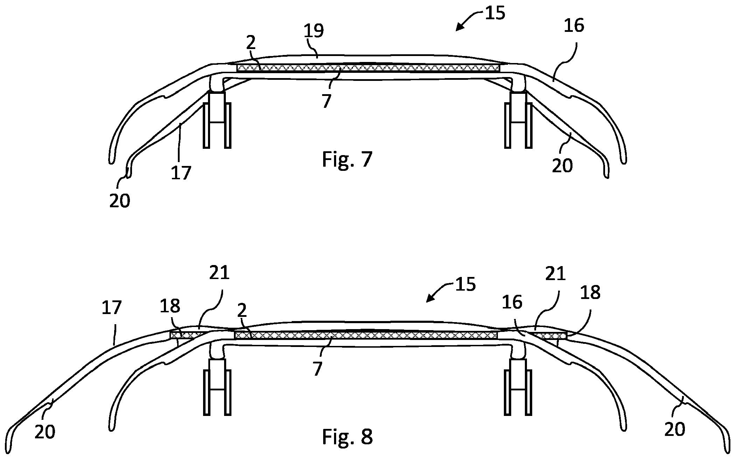

In Fig. 7 und Fig. 8 ist ein verstellbarer Stromabnehmer 15 für den grenzüberschreitenden Schienenverkehr gezeigt. Der Stromabnehmer 15 weist neben wenigstens einem starr angeordneten Teil 16 einen verfahrbar angeordneten Teil 17 auf, der zwischen einer eingefahrenen und einer ausgefahrenen Position beweglich angeordnet ist. In Fig. 6 ist der Stromabnehmer 15 in der eingefahrenen Position gezeigt, in Fig. 7 in der ausgefahrenen Position. Der Stromabnehmer 15 weist neben einer starr angeordneten Schleifleiste 19 verfahrbar ausgestaltete Auflaufhörner 20 und verfahrbar ausgestaltete Schleifleisten 21 auf, die jeweils zwischen einer eingefahrenen und einer ausgefahrenen Position beweglich angeordnet sind.

Am Stromabnehmer 15 ist entsprechend dem Stromabnehmer der Fig. 1 eine Windleitvorrichtung 2 mit einem Windleitprofil 7 befestigt. Zusätzlich ist auch an den verfahrbar angeordneten Teilen 17 des Stromabnehmers 15 jeweils ein Windleitprofil 18 vorgesehen. Das Windleitprofil 18 ist in der eingefahrenen Position in Fahrtrichtung von dem Profil des starr angeordneten Teils 16 vollständig überdeckt und hat somit bei eingefahrenem Stromabnehmer 15 keinen Einfluss auf die aerodynamischen Eigenschaften des Stromabnehmers.

Die beschriebenen und dargestellten spezifischen Ausführungsformen sind für die Ausführung der Erfindung nicht bindend, sondern können im Rahmen der vorliegenden Erfindung geeignet modifiziert werden, ohne vom Schutzbereich der vorliegenden Erfindung abzuweichen.

### Bezugszeichenliste

- α: Neigungswinkel
- F: Fahrtrichtung
- H: Höhe des Schleifelementträgers
- h: Höhe des Windleitprofils
- L: Länge Schleifelementträger
- l: Länge Windleitprofil

- 1: Stromabnehmer
- 2: Windleitvorrichtung
- 3: Schleifelement
- 4: Schleifelementträger
- 5: Auflaufhorn
- 6: Traggestell
- 7: Windleitprofil
- 8: Windleitabschnitte
- 9: Ausnehmung
- 10: Ausnehmung
- 11: Schraube
- 12: Windleitfläche
- 13: Windleitfläche
- 14: Luftströmung
- 15: Stromabnehmer
- 16: Starr angeordneter Teil
- 17: Verfahrbar angeordneter Teil
- 18: Windleitprofil
- 19: Schleifleiste
- 20: Auflaufhorn
- 21: Schleifleiste
- 22: Leitfläche
- 23: Befestigungsabschnitt
- 24: Windleitprofil
- 25: Fase
- 26: Fase
- 27: Fase

## Patentansprüche

1. Stromabnehmer (1, 15) für ein in wenigstens einer Fahrtrichtung (F) betreibbares Schienenfahrzeug, insbesondere für ein Hochgeschwindigkeitsschienenfahrzeug, mit mindestens einem Schleifelementträger (4) mit einem Schleifelement (3) zur elektrischen Kontaktierung eines entlang einer Fahrstrecke verlaufenden Stromleiters, mit einer Andrückeinrichtung, durch die der Schleifelementträger (4) gegen den Stromleiter drückbar ist, und mit einer Windleitvorrichtung (2) mit wenigstens einem Windleitprofil (7) zur Erzeugung eines Auf- oder Abtriebs im Fahrtwind des Schienenfahrzeuges, wobei die Windleitvorrichtung (2) lösbar an dem Schleifelementträger (4) befestigt ist und eine Länge (l) aufweist, die einem Großteil der Länge (L) eines Schleifelementträgers (4) beträgt.

2. Stromabnehmer (1, 15) nach Anspruch 1, wobei die Windleitvorrichtung (2) eine Länge (l) aufweist, die wenigstens 60% der Länge (L) des Schleifelementträgers (4) beträgt, bevorzugt wenigstens 80%.

3. Stromabnehmer (1, 15) nach einem der obigen Ansprüche, wobei durch das Windleitprofil (7) im Fahrtwind ein Abtrieb erzeugbar ist.

4. Stromabnehmer (1, 15) nach einem der obigen Ansprüche, wobei das Windleitprofil (7) eine Leitfläche (22) aufweist, die um einen Neigungswinkel (a) zur Fahrtrichtung (F) oder zur lokalen Hauptströmungsrichtung geneigt angeordnet ist, wobei der Neigungswinkel mehr als 20° beträgt, vorzugsweise mehr als 40°, insbesondere mehr als 70° beträgt.

5. Stromabnehmer (1, 15) nach einem der obigen Ansprüche, wobei das Windleitprofil (7) in horizontaler Richtung und in oder entgegen der Fahrtrichtung (F) durch den Schleifelementträger (4) und/oder das Schleifelement (3) im Wesentlichen vollständig verdeckt angeordnet ist.

6. Stromabnehmer (1, 15) nach einem der obigen Ansprüche, wobei die Andrückeinrichtung einen Antrieb aufweist und eine Steuervorrichtung zur Ansteuerung des Antriebes sowie eine mit der Steuereinrichtung verknüpfte Kontaktkraftmesseinrichtung vorgesehen ist, wobei die Steuereinrichtung ausgestaltet ist, bei Unterschreiten einer vorbestimmten Kontaktkraft eine Erhöhung der Kontaktkraft zu bewirken.

7. Stromabnehmer (1, 15) nach einem der obigen Ansprüche, wobei das Verhältnis der Breite des Windleitprofils zur Breite des Schleifelementträgers (4) und/oder des Schleifelementes (3) wenigstens 0,4, vorzugsweise wenigstens 0,7, weiter vorzugsweise wenigstens 0,9 beträgt.

8. Stromabnehmer (1, 15) nach einem der obigen Ansprüche, wobei der Stromabnehmer (1, 15) neben wenigstens einem starr angeordneten Teil (16) einen verfahrbar angeordneten Teil (17) aufweist, der zwischen einer eingefahrenen und einer ausgefahrenen Position beweglich angeordnet ist, wobei an dem verfahrbar angeordneten Teil (17) ein Windleitprofil (7) befestigt ist und das Windleitprofil (7) in der eingefahrenen Position in und/oder entgegen der Fahrtrichtung (F) von dem Profil des starr angeordneten Teils (16) überdeckt ist.

9. Stromabnehmer (1, 15) nach einem der obigen Ansprüche, wobei der Stromabnehmer (1, 15) eine um eine Drehachse gelagerte Stromabnehmerwippe mit zwei Schleifelementen umfasst und an jeder der Schleifelemente ein Windleitprofil (7) befestigt ist, wobei die Windleitprofile (7) derart ausgestaltet sind, dass im Fahrtwind durch die Windleitprofile erzeugte Kräfte bezüglich der Drehachse im Wesentlichen ausgeglichen sind.

10. Windleitprofil (7) für einen Stromabnehmer (1, 15) nach einem der obigen Ansprüche.

11. Windleitprofil (7) nach Anspruch 10, wobei das Windleitprofil (7) aus einem Vollprofil besteht.

12. Windleitprofil (7) nach Anspruch 10 oder 11, wobei das Windleitprofil (7) wenigstens teilweise aus einem nichtmetallischen Werkstoff, insbesondere PTFE gebildet ist.

13. Windleitprofil (7) nach einem der Ansprüche 10 bis 12, wobei das Windleitprofil (7) wenigstens abschnittsweise keilförmig ausgestaltet ist.

14. Windleitprofil (7) nach einem Ansprüche 10 bis 13, **dadurch gekennzeichnet, dass** das Windleitprofil (7) eine Windleitfläche (13) aufweist, wobei die Windleitfläche (13) wenigstens eine Ausnehmung (9) oder eine Vielzahl von Ausnehmungen (9) aufweist.

15. Windleitprofil (7) nach einem Ansprüche 10 bis 14, **dadurch gekennzeichnet, dass** das Windleitprofil (7) eine Höhe (H) aufweist, die weniger als 20 %, vorzugsweise weniger als 10 % der Länge (L) des Windleitprofils beträgt.
